# EUROPEAN PATENT SPECIFICATION

(11) **EP 2 785 581 B1**
(45) Date of publication and mention of the grant of the patent: **19.10.2016**
(21) Application number: 12813491.3
(22) Date of filing: 26.11.2012
(51) Int. Cl.: B62K 13/06, B62K 5/00

(54) **DUO CYCLE**
TANDEM
VÉLO TANDEM

(30) Priority: 28.11.2011 IT RM20110627
(43) Date of publication of application: 08.10.2014
(73) Proprietor: Celani, Luigi, 00119 Rome (IT)
(72) Inventor: Celani, Luigi, 00119 Rome (IT)
(74) Representative: Di Giovine, Paolo
(86) International application number: PCT/IB2012/056738
(87) International publication number: WO 2013/080119

(56) References cited:
- EP-A1- 2 301 833
- WO-A1-2005/037637
- FR-A- 467 858
- FR-A1- 2 467 764
- GB-A- 2 283 467
- NL-C1- 1 014 135

## Description

### TECHNICAL FIELD OF THE INVENTION

The present invention relates to the field of the vehicles, for example single-seat or double-seat vehicles in tandem, both moved by human force with pedals, and propelled by any kind of engine or with mixed propulsion. The object of the present invention is a vehicle comprising two vehicles placed side by side with at least two wheels in tandem.

### STATE OF ART

The document GB2283467 describes a vehicle with all the features of the preamble of claim 1. The vehicles with two wheels in tandem, both single-seat and double-seat ones, both moved by human force with pedals and by engines of various nature or even with mixed propulsion, for the equilibrium obey to precise physical laws. The longitudinal equilibrium, both in the stationary position and during motion, is stable, guaranteed by the position of the centre of gravity with respect to the two resting points of the wheels; the lateral one is defined instable as the vehicle on itself hasn't got it. In the stationary position the driver acts by resting his/her feet onto the ground; during motion he/she must act so that the resulting force of the ones converging onto the centre of gravity of the vehicle-driver (plus possible passenger) assembly intersects the joining point of the points in contact with the ground between front wheel and rear wheel. Given its precariousness, this equilibrium sometimes breaks, by determining the fall of the vehicle. For a general vehicle with two wheels in tandem we can say that, for its objective configuration, several disadvantages can be detected which can be summarized as follows: 1. Natural lack of equilibrium in the stationary position. 2. Equilibrium precariousness in motion due to the features of the vehicle in relation to the dynamics of the manoeuvres. 3. Upon bowing sideways in searching for the side equilibrium there are no mechanical limits which can stop the stroke thereof to avoid the fall. 4. High centre of gravity of the vehicle-driver (plus possible passenger) assembly due to the raised position of the seats. 5. In case of accident the vehicle does not offer protection to driver and passenger as they are easily thrown away from the seat and they have to dispose autonomously their own kinetic energy. 6. In the version with pedals, due to his/her position, the driver cannot fully exploit his/her force. 7. The possibility of disturbing the equilibrium by the passenger is considerable.

### SUMMARY OF THE INVENTION

The object of the present invention is solving the above-mentioned disadvantages by providing a vehicle as substantially described in claim 1.

Preferred features of the invention are object of the herewith enclosed depending claims.

The vehicle of the present invention offers the following additional advantages: 1. The double vehicle naturally is in erected position in the stationary position. 2. For its configuration with four resting points and the effect of the springs which tend to bring the double vehicle back vertically, the equilibrium during motion is less uncertain. 3. The side tiltings have maximum stops which can be freely adjusted, preventing the double vehicle to fall. 4. The centre of gravity plus driver (plus possible passenger) is lower, being the plane of the seats. 5.In case of accident, being driver and passenger in the centre of the two side-by-side vehicles and in a lowered position, it is more difficult to throw them away and they can be protected by the double vehicle with the deformation and energy absorption thereof. 6. It is easier to drive the double vehicle. 7. In the version with pedals the driver, thanks to his/her position, can produce a greater power which is linked to his/her effective muscle force. 8. For the greater stability thereof, it is possible using fairings with aerodynamic purposes or for protection from air or rain. 9. Towing a trailer, as provided by the rules and within its limits, is easier and safer. 10. The adjusting of the pre-load of the springs allows changing the behaviour sensibility of the double vehicle. 11.In the version with pedals the implementation of a sequential gear is made easier. 12. The possibility that the passenger disturbs the equilibrium of double vehicle is lower.

Still additional advantages, as well as the features and the use mode of the present invention will result evident from the following detailed description of some preferred embodiments, shown by way of example and not for limitative purposes, by referring to the figures of the enclosed drawings.

### BRIEF DESCRIPTION OF THE DRAWING

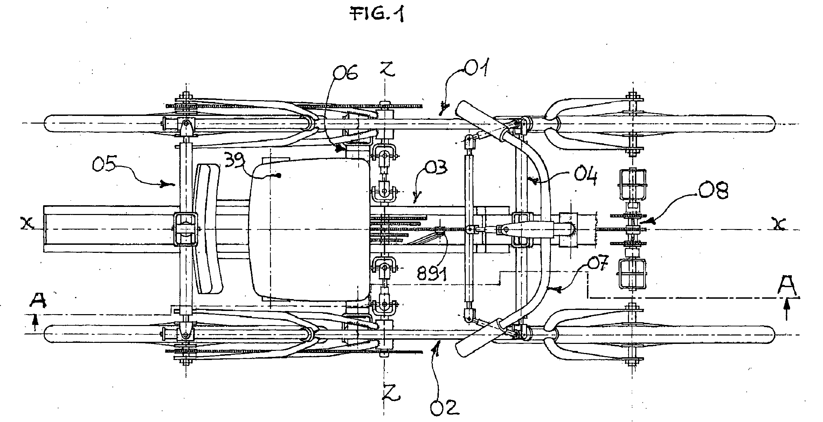

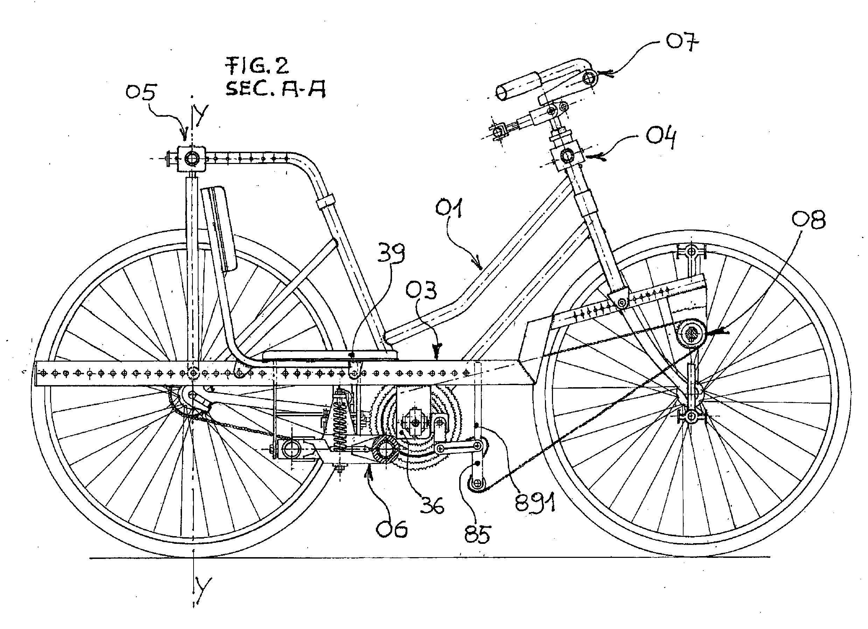

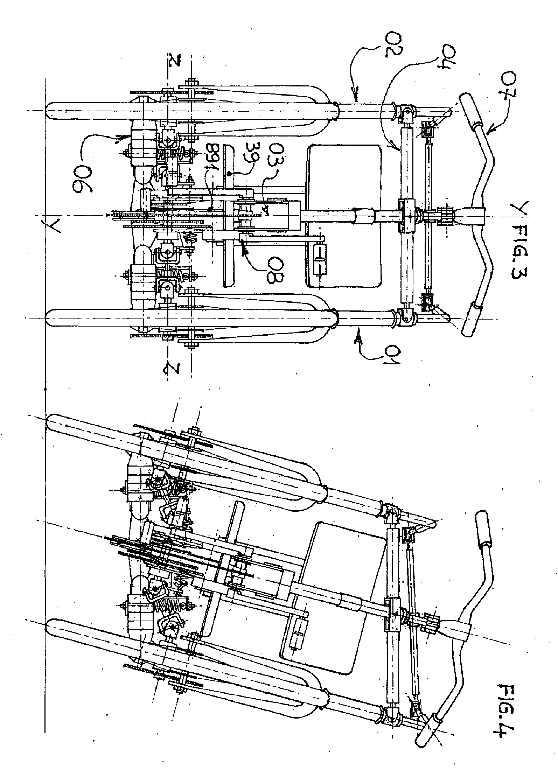

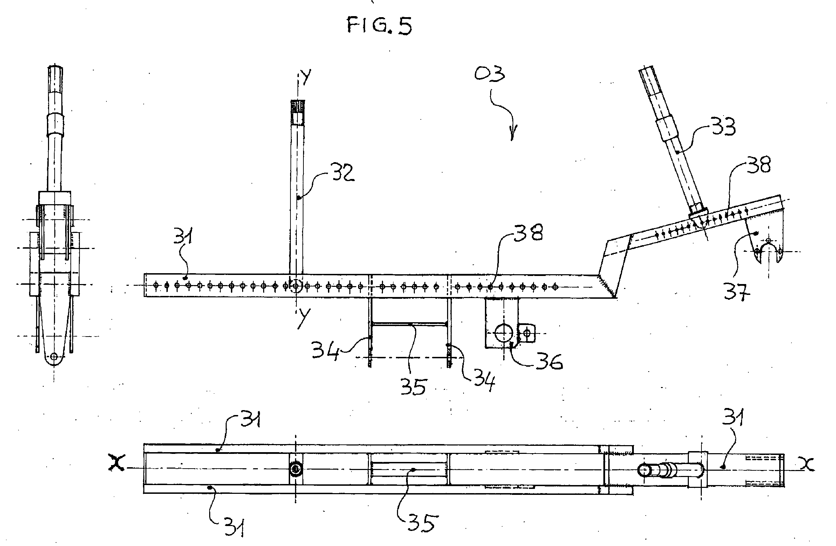

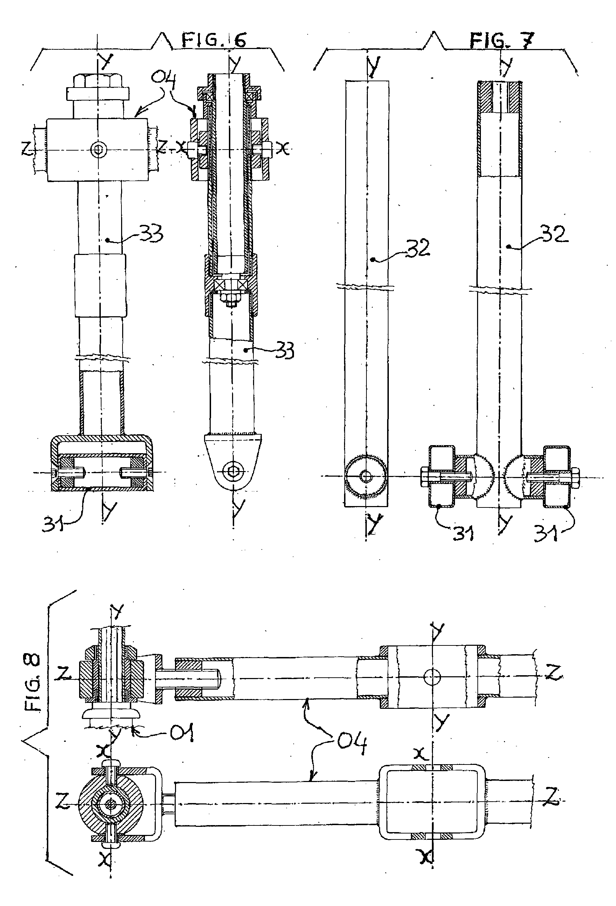

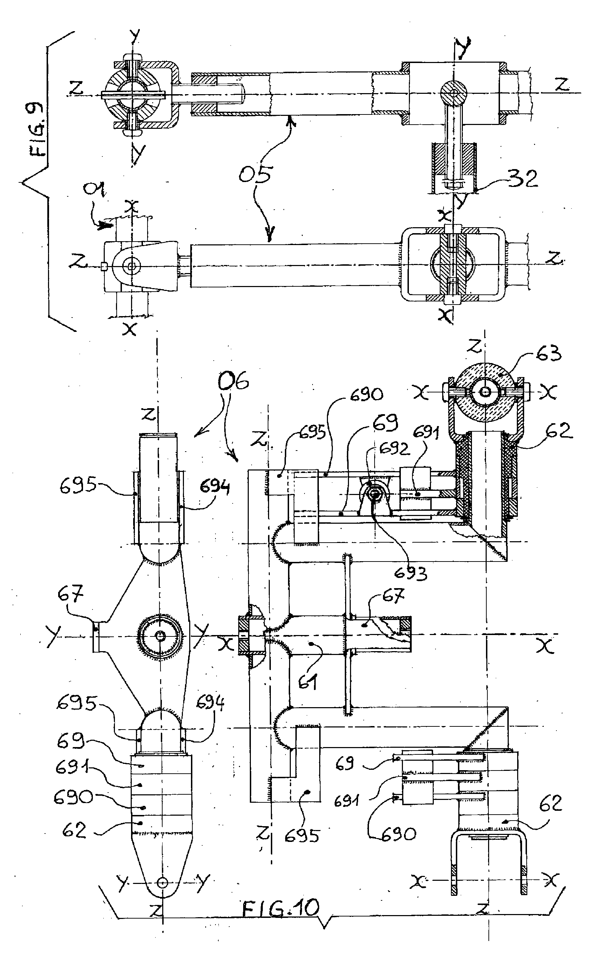

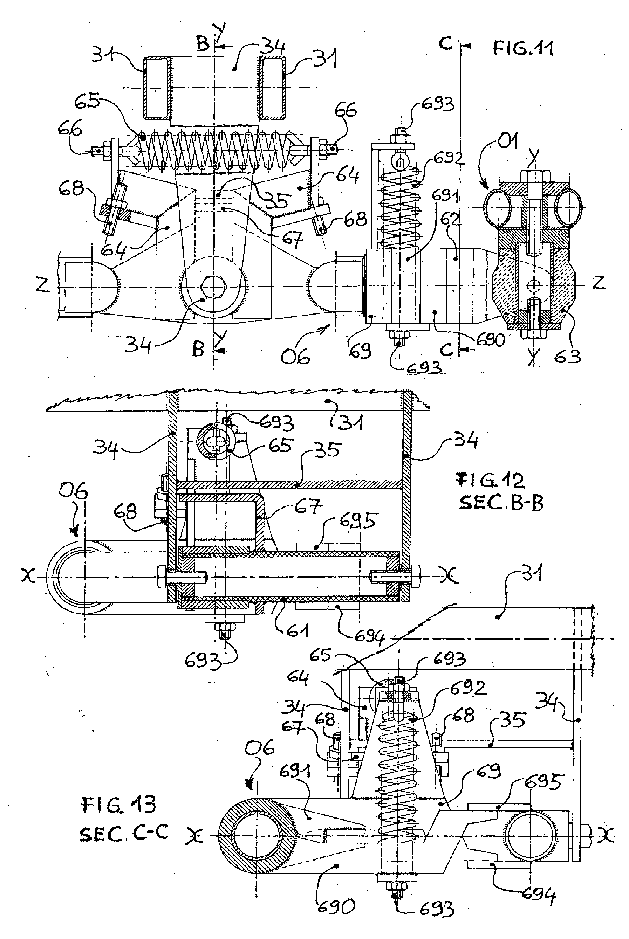

The enclosed drawings illustrate a preferred embodiment of the present invention (not limitative example). Figure 1 (Sc. 13%) Plan view of the double vehicle of the present invention. Figure 2 (Sc. 13%) Sect. A-A according to the trace plane of figure 1. Figure 3 (Sc. 13%) Anterior front view with the vertical double vehicle. Figure 4 (Sc. 13%) Anterior front view with the double vehicle tilted by 15°. Figure 5 (Sc. 13%) Three classical views of the intermediate frame. Figure 6 (Sc. 35%) Particular of the front upright of the intermediate frame. Figure 7 (Sc. 35%) Particular of the rear upright of the intermediate frame. Figure 8 (Sc. 35%) Particular of the upper front crossbar. Figure 9 (Sc. 35%) Particular of the upper rear crossbar. Figure 10 (Sc. 27.5%) Particular of the central lower crossbar. Figure 11 (Sc. 35%) Front view of the assembled lower crossbar. Figure 12 (Sc. 35%) Sect. B-B according to the trace plane of figure 11. Figure 13 (Sc. 35%) Sect. C-C according to the trace plane of figure 11.

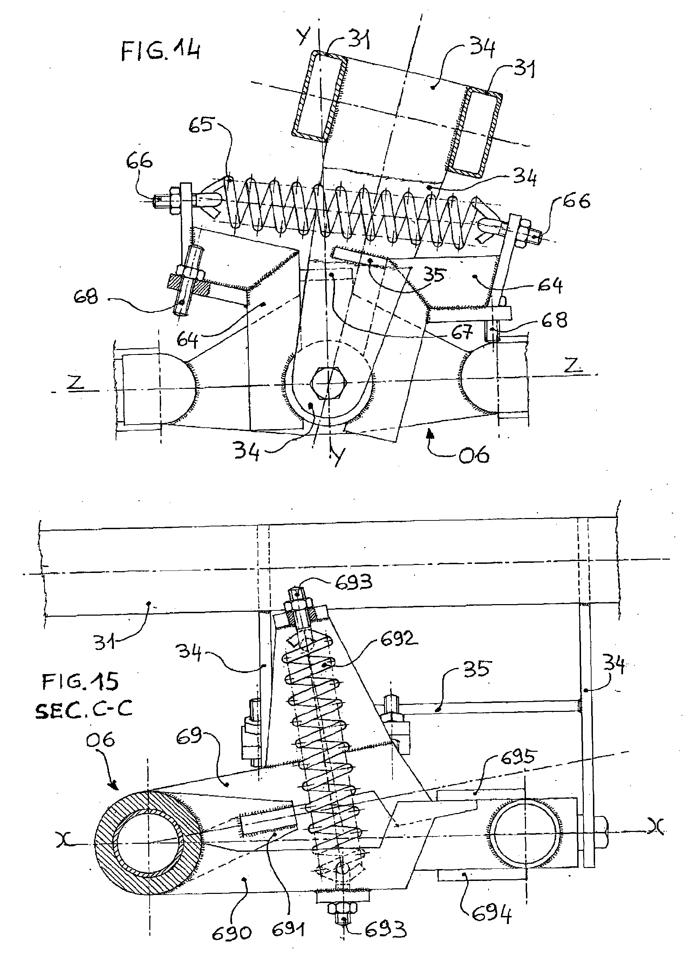

Figure 14 (Sc. 45%) Front view of the assembled lower crossbar with the tilted intermediate frame.

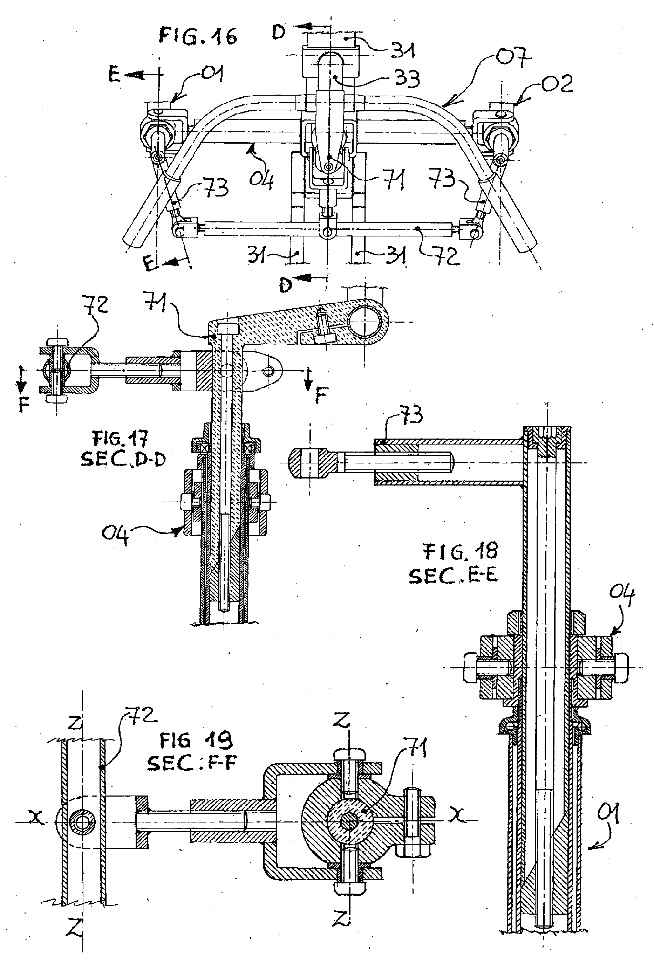

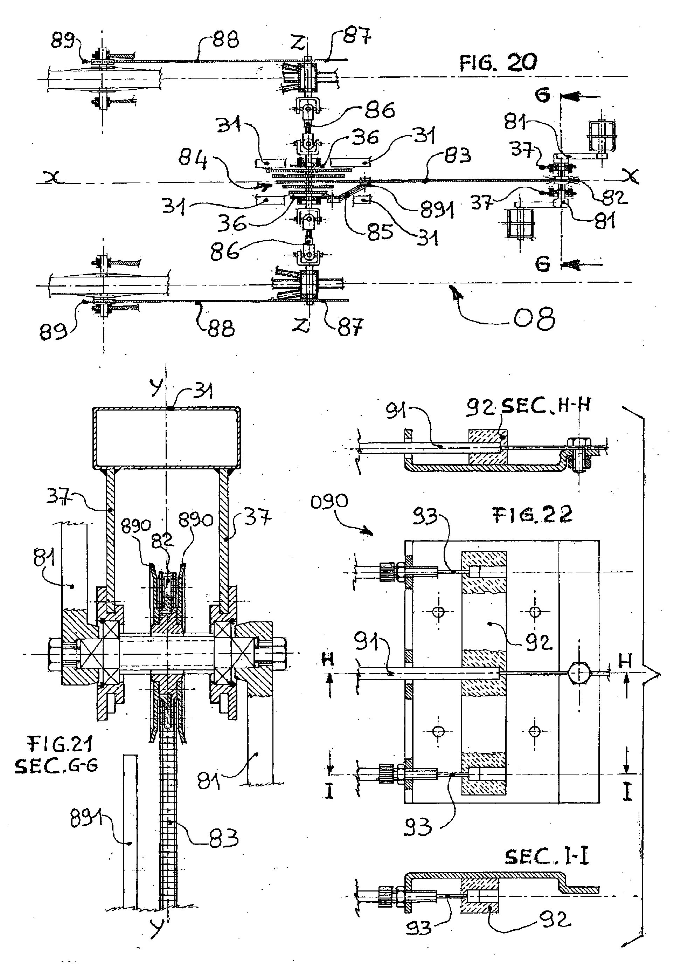

Figure 15 (Sc. 45%) Sect. C-C according to the trace plane of figure 11 with the opposite side vehicles tilted by 15°. Figure 16 (Sc. 17.5%) Plan view of the steering system. Figure 17 (Sc. 35%) Sect. D-D according to the trace plane of figure 16. Figure 18 (Sc. 55%) Sect. E-E according to the trace plane of figure 16. Figure 19 (Sc. 55%) Sect. F-F according to the trace plane of figure 17. Figure 20 (Sc. 11%) Plan view of the pedal-propelled system. Figure 21 (Sc. 55%) Sect. G-G according to the trace plane of figure 20. Figure 22 (Sc. 55%) Device for compensating the braking force.

### DETAILED DESCRIPTION OF THE INVENTION

The present invention provides a new vehicle with a different configuration which allows it to eliminate the drawbacks connected to the use of the vehicles with two wheels in tandem in the state of art, by keeping the features of functionality, overall (even lateral) dimensions, manoeuvrability (even in the search for equilibrium during motion by means of side tilting), by facilitating the user thereof and by increasing safety.

According to one embodiment, the vehicle comprises a first frame portion 01 comprising at least two wheels in tandem; a second frame portion 02 comprising at least two wheels in tandem and means for linking said first frame portion to said second frame portion, so that the vehicle can assume at least an original equilibrium position. The linking means is jointed (articulated) with an arrangement so that each frame portion has a degree of freedom of rotation around a longitudinal axis XX and a degree of freedom of rotation around a transversal axis ZZ defined with respect to the vehicle running direction. The arrangements of said first 01 and second 02 frame portion are restrained therebetween in the rotation around the axis XX and independent in the rotation around the axis ZZ.

The vehicle further comprises first elastic means 65 to bring back said vehicle into said original position with respect to the longitudinal axis XX and second elastic means 692 to bring back said vehicle into said original position with respect to the transversal axis ZZ. During motion, under stressing the driver and the ground, the vehicle could assume all attitudes, both transversal and longitudinal ones, with natural tendency, thanks to the elastic means, it will come back into the initial position, which is the one of mutual longitudinal and perpendicular alignment with the ground in the transversal direction.

In a preferred embodiment said first elastic means 65 and/or said second elastic means 692 is pre-loaded, thus it could comprise suitable devices for the pre-loading, for example it could comprise one or more springs with adjustable pre-load. In this embodiment in order to change the attitude of the vehicle according to the longitudinal axis XX and transversal axis ZZ it will be then necessary to overcome the pre-loading force of the related elastic means 65,692.

According to one embodiment the vehicle further comprises an intermediate frame 03 and wherein said linking means comprises two upper linking crossbars 04, 05 and one lower linking crossbar 06 between said first and second frame portion 01, 02 and said intermediate frame 03, wherein:
- the linking points between said intermediate frame 03 and said upper crossbars 04, 05 are articulated, with two degrees of freedom around the longitudinal axis XX and around the vertical axis YY;
- the linking point between said intermediate frame 03 and said lower crossbar (06) is articulated with a single degree of freedom around the longitudinal axis XX.
- the linking points between said upper crossbars 04, 05 and the lower crossbar 06 and said first and second frame portion 01, 02 are articulated, with three degrees of freedom around the longitudinal XX, vertical YY and transversal ZZ axes.

According to one additional embodiment the degree of freedom between said intermediate frame 03 and said lower crossbar 06 around the longitudinal axis XX has an established stroke, which can be adjusted clockwise and counterclockwise, being the starting oscillation condition the one of perpendicularity between said frame 03 and said crossbar 06 in the rotation plane.

The vehicle of the present invention could comprise typical members existing in the vehicles such as one or more seats for the passenger, a steering system 07, a braking system 09, a propulsion system 08 for example with pedals, with engine or a mixed system.

According to one embodiment the steering system 07 could comprise a Jeantaud quadrilateral having the articulated linkings with three degrees of freedom so as to allow all the transversal and longitudinal attitudes requested to said vehicle.

According to one embodiment the braking system 09 will be characterized in that said braking system 09, in the brake mechanical control chain, from the lever to the pliers of the front or rear two wheels, has a device 090 for dividing up the force so as to avoid differences between the wheels of said frame portions 01,02.

According to one embodiment the vehicle of the present invention comprises an intermediate frame, two equal and symmetrical vehicles each one with two wheels in tandem placed side by side to the frame, three linking crossbars linking therebetween the two side-by-side vehicles and the intermediate frame. For example, the seat for the driver, a possible seat for a passenger (or basket for goods), the handlebars with the several controls, the propelling organs, which can be with pedals, with engine with different nature or mixed, could be housed on the intermediate frame. The central handlebars, by means of a Jeantaud quadrilateral, controls the side front wheels, with articulated restraints with three degrees of freedom. The linking points between the crossbars and the intermediate frame and with the two side-by-side vehicles are articulated. The restraints between the two upper crossbars and the intermediate frame have two degrees of freedom, one around the longitudinal axis and one around the vertical axis. The restraint between the lower crossbar and the intermediate frame has only the degree of freedom around the longitudinal axis. The restraints between the three crossbars and the two side vehicles have all the three degrees of freedom around the three longitudinal, transversal and vertical axes. The degree of freedom around the longitudinal axis of the restraints between the intermediate frame and the lower crossbar is handled by a spring which can be adjusted in the pre-load, which fixes the initial position perpendicular to the ground of the double vehicle and it allows the tilting thereof in the two sides with a stroke adjustable as far as the abutment point, under the driver action. The degree of freedom around the transversal axis of the restraint between the lower crossbar and each one of the two side-by-side vehicles is handled by a spring for each side, adjustable in the pre-load, which fixes the related alignment longitudinal initial position between the intermediate frame and each one of the two vehicles, thus allowing each one thereof to copy the ground as far as the abutment point independently one from the other one and from the frame. During the motion, under stressing the driver and the ground, the double vehicle assumes all attitudes, both transversal and longitudinal ones, with natural tendency, thanks to the springs, to come back into the initial position, which is the one of mutual longitudinal alignment and perpendicularity with the ground in the transversal direction.

Hereinafter a preferred embodiment of the invention is described. In this embodiment the human propulsion with pedals is provided. In other embodiments systems with engine propulsion or mixed systems could be used. In order to comprehend the illustration, the enclosed drawings will be referred to, which are quicker and easier to be understood. To this purpose the double vehicle has been divided into groups facilitating to list the interest components for the invention and the explanation of the functions thereof. The materials which can be used for implementing the components are steel alloys of various nature, light alloys or titanium alloys, reinforced plastic materials, etc. For sake of representation clarity some details, even if they belong to the double vehicle, are not shown in the drawings, more exactly: the braking system (except for the device for the brake compensation which is shown in the drawings), the derailleur control, the rear seat for a passenger (or basket for the goods), plastic disks on the inner face of the wheels to prevent interferences with the spokes, hook for possible trailer, aerodynamic fairings (or for protection from wind and/or rain), bumpers, lighting or signalling plants etc. The above groups are: 01- Left vehicle with two wheels in tandem; 02- Right vehicle with two wheels in tandem; 03-Intermediate frame; 04- Front upper crossbar; 05- Rear upper crossbar; 06- Lower central crossbar; 07- Steering system; 08- Propulsion system; 09- Braking system. We start by saying that for the following explanation reference is made to the three axes orthogonal therebetween: XX- longitudinal axis, YY- vertical axis and ZZ- transversal axis of the vehicle. The double vehicle constituted by two side-by-side vehicles, each one with two wheels in tandem object of the present invention, is represented in figures 1, 2, 3, 4 with designation of the mentioned groups.

In figure 2, being a section, the group 02 is lacking. Of the groups 01 and 02 no detailed drawings are given as they are already defined in the constructive practice. The group 03 constituting the intermediate frame is represented in figures 5, 6, 7. In figure 5 we have the structural members 31, 32, 33, 34, 35, 36, 37. The holes 38 of the rib 31 allow the attachment in the suitable points of the driver seat 39 (represented in figures 1, 2, 3, 4), of the not represented uprights 32, 33, rear seat (or basket for goods) and hook for trailer and various things. The upright 33 in figure 6 has two degrees of freedom at the attachment with the crossbar 04 around the axes XX and YY. The upright 32 in figure 7 has two degrees of freedom at the attachment with the crossbar 05 around the axes XX and YY (visible in figure 9). The groups 04, 05, 06 are constituted by the crossbars, the length thereof determines the transversal overall dimensions of the double vehicle, thereto the length of the driver seat 39 contribute, the overall dimensions of the side-by-side vehicles 01 and 02 and the jokes requested for the operation. They are represented by the figures 8, 9, 10. The upper crossbars 04, 05 (figures 8 and 9) in the side linkages with the groups 01 and 02 enjoys three degrees of freedom, around the axes XX, YY and ZZ. The lower central crossbar 06, figure 10, 11, 12, 13, 14, 15, represents the force member in the linkage between the two side-by-side vehicles with two wheels in tandem 01 and 02 and it handles the transversal and longitudinal attitude of the double vehicle object of the present invention. As far as the linkage between the crossbar 06 and the frame 03 is concerned, in figures 10, 11 and 12 the coupling between the stirrups 34 of the frame 03 and the central tube 61 of the crossbar 06 can be seen. Amongthereof there is only one degree of freedom around the axis XX; this linkage allows the attitudes transversal to the double vehicle, but it does not allow one of the two side-by-side vehicles 01 and 02 to surpass one with respect to the other one in the longitudinal direction. For linking the crossbar 06 and the two side-by-side vehicles 01 and 02 there are the two fork-like terminals 62 which restrain to the joint 63 of the same vehicles 01, 02 and they are idle on the crossbar 06. This linkage has three degrees of freedom: around the axes XX, YY, ZZ. Relating to the handling of the attitudes in figures 10, 11, 12, 13 it is possible detecting the components of the mechanisms. For the transversal attitude there are two symmetrical and opposed arms 64 rotating idly on the central tube 61. A tension spring 65 through the two screws 66 for adjusting the pre-load obliges the two arms 64 to abut onto the tab 67 integral to the crossbar 06. The bar 35 is pressed between the arms 64 thus giving clockwise and counterclockwise oscillation start position to the frame 03 and to the whole double vehicle. In case the double vehicle is pushed laterally with force greater than the pre-load of the spring 65, in figure 14 it can be seen that the bar 35 pushes one of the two arms 64 on one side as far as one of the two screws 68 for adjusting the side stroke arrives in abutment, by locking the tilting. For the longitudinal attitude, for each one of the two side-by-side vehicles 01 and 02, independent therebetween but however linked through the frame 03 by the crossbars 04, 05, 06, there are an idle inner arm 69 and an idle outer arm 690 onto the hub of the terminal 62. Between the two arms a lever 691 is fitted to the hub of the terminal 62 and it rotates therewith and therefore with the related side-by-side vehicle. A tension spring 692 through the two screws 693 adjusting the pre-load obliges the two arms 69, 690 to abut onto the tabs 694, 695 integral to the crossbars 06. The plate of the lever 691 is pressed between the two arms 69, 690, thus giving position for starting clockwise and counterclock oscillation to the two side-by-side vehicles 01 and 02 with respect to the intermediate frame 03. In case the relating side-by-side vehicle is forced to rotate by the route misalignments with the terminal 62 by a greater force than the one of the pre-load of the spring 692, in figure 15 it can be seen that the plate of the lever 691 pushes the arm 69 upwards until it abuts the tab 695, by locking the stroke. The general configuration of the steering system 07 with Jeantaud bar is represented with explaining details in figures 16, 17, 18, 19. To the obviousness of the drawings it has to be added that between the supporting handlebars 71 and the coupling bar 72 there are three degrees of freedom, around the three axes XX, YY, ZZ; furthermore between the coupling bar 72 and the two arms 73 there are three degrees of freedom around the three converging axes. In this way the steering system can deform as requested by the attitude variations of the two side-by-side vehicles 01 and 02 by the intermediate frame 03. The propelling system (08) in the chosen version is represented in figures 20 and 21. The exclusive components of the propulsion with pedals are the pedals 81 with shaft, driving gear rim 82, chain 83, pinion pack 84 fixed on the shaft thereof, derailleur 85; in common with the propulsion with engine (both in the version with one single engine and in that with auxiliary engine, however the power insertion is upwards the homocinetic joints) there are the homocinetic joints 86, the central motions with gearwheel 87, the chain 88, the pinion with free wheel 89. With the propulsion with engine, if one wants to use the exhaust brake, it is possible to stop the free wheels 89 and one puts a differential at the output of the engine gears. Features of the propulsion with pedals: - The gearwheels 87 and the pinions with free wheel 89 are equal on the two side-by-side vehicles 01, 02. -The rear free wheels 89 act also as differential. The driving gear rim 82 slides sideways on the grooved shaft of the pedals; this allows implementing a pinion pack 84 with the number thereof necessary to encompass all ratios requested by the use type of the double vehicle. When the derailleur 85 chooses a pinion of the pack 84 the chain 83 moves and drags the driving gear rim 82 sideways by aligning it; the supports 890 prevent the chain 83 from stepping over the teeth. The variation range of the ratios implemented between driving wheel 82 and pinion pack 84 can be positioned mathematically according to what requested by the use type of the double vehicle, by varying the number of teeth of the gearwheel 87 and of the pinion of the free wheel 89. - The double vehicle requests to be able to change ratios from the stationary position towards low ratios for restart, if necessary. This is allowed by the vertical bar 891 positioned on the carriage of the derailleur 85. It performs the change only if by pedalling backwards it is moved towards the pinions with large diameter of the pack 84, therefore it pushes in that direction the upper tract of the chain 83. In the braking mechanical system 09, figure 22, the conventional portions are not represented. Each lever of the handlebars brakes two wheels, a right wheel and a left wheel. The device 090 prevents braking differences between a wheel and another one. The Bowden cable 91 which comes from the handlebars, stresses the small bar 92 in the centre between the two return cables 93 by dividing up into equal value the force they transfer to the pliers of brakes. It is clear that the double vehicle object of this invention, even if it keeps the features characterizing it and the ratios between the portions thereof, can assume different sizes to adapt to the antropometric features of men, women, boys etc. It is believed that within the structural rule the possibility of preparing systems for assembling and disassembling the various portions is very quick so as to make the stowing and the transportation convenient, using side-by-side vehicles with two wheels in tandem with both front and rear suspensions, using forks of the front wheel with one single arm, transmitting the motion on one single rear wheel for economical reasons, without the originality principles are compromised. The industrial exploitation of the present invention appears evident from the features and performances it offers. It could be used for moving people or things within the limits of rules and for the most different reasons, just as it already happens with the similar vehicles in use. The implementation type which has been described is one of the many possible ones. We have chosen to describe an implementation mode for the version with pedals, but a person skilled in the art could easily provide others of this version with pedals as well as the mixed ones or the ones only with engine, without leaving the spirit of the present invention for this reason.

The present description further comprises even the following important points:
Point 1: Double vehicle for transporting a driver and possibly, within the limits of rules, a passenger in tandem or alternatively a quantity of goods, constituted by: "Two equal and symmetrical side-by-side vehicles, each one with two wheels in tandem 01, 02, an intermediate frame 03 with seat for driver and in case a passenger, a steering system 07, a propulsion system with pedals 08 (or with engine of various nature or mixed system), a braking system 09, two upper linking crossbars 04, 05 and a lower linking crossbar 06 between the side-by-side vehicles 01, 02 and the intermediate frame 03, (not represented) visual and sound signalling systems according to current rules", characterized in that: - The linking points between the intermediate frame 03 and the upper crossbars 04, 05 are articulated, with two degrees of freedom around the longitudinal axis XX and around the vertical axis YY; the linking point between the intermediate frame 03 and the lower crossbar 06 is articulated with one single degree of freedom around the longitudinal axis XX. - The linking points between the upper crossbars 04, 05 and the lower crossbar 06 and the two side-by-side vehicles each one with two wheels in tandem 01, 02 are articulated, with three degrees of freedom around the longitudinal XX, vertical YY and transversal ZZ axes. - The degree of freedom between the intermediate frame 03 and the lower crossbar 06 around the longitudinal axis XX has an established stroke adjustable clockwise and counterclockwise, being the starting oscillation condition the one of perpendicularity between frame 03 and crossbar 06 in the rotation plane. This oscillation is submitted to a tension spring 65 with adjustable pre-load which locks the relative position between the frame 03 and the lower crossbar 06 in the starting oscillation condition. To tilt sideways the double vehicle it is necessary to overcome the pre-load force of the spring 65. - The degree of freedom between the lower crossbar 06 and the two side-by-side vehicles each one with two wheels in tandem 01, 02 around the transversal axis ZZ has a maximum stroke established clockwise and counterclockwise, being the starting oscillation condition the one of longitudinal alignment between intermediate frame 03 and the two side-by-side vehicles each one with two wheels in tandem 01, 02. This oscillation is submitted to a tension spring 692 for each side-by-side vehicle with adjustable pre-load locking the relative position between frame 03 and the side-by-side vehicles 01, 02 in the starting oscillation condition. In order to change the attitude the side-by-side vehicles 01, 02 must overcome the pre-load force of the related spring 692.
Point 2 Double vehicle constituted by two side-by-side vehicles each one with two wheels in tandem 01,02, as for point 1, characterized in that the Jeantaud quadrilateral in the steering system 07 has the articulated linkages with three degrees of freedom so as to allow all the transversal and longitudinal attitudes requested to the double vehicle.
Point 3 Double vehicle constituted by two side-by-side vehicles each one with two wheels in tandem 01,02, as for point 1, characterized in that in the version with propulsion with pedals 08 the single driving gear rim 82 on the shaft of the pedals can slide axially to align to the rear pinion 84 selected by the derailleur 85; the driving gear rim 82 is dragged sideways by the linking chain (83) thereto the stepping over the teeth is prevented by the supports 890.
Point 4 Double vehicle constituted by two side-by-side vehicles each one with two wheels in tandem 01, 02, as for point 1, characterized in that in the version with propulsion with pedals 08 the vertical bar 891 on the derailleur 85 allows to change from the stationary position in order to obtain ratios to the gear advantageous to restarts, by pedalling backwards and actuating the derailleur 85 towards pinions 84 with greater diameter.
Point 5 Double vehicle constituted by two side-by-side vehicles each one with two wheels in tandem 01,02, as for point 1, characterized in that in the version with propulsion with pedals 08 the ratios between the driving gear rim 82 and the pinions 84 implement the gear variation range, whereas the ratio between the gearwheel 87 and the pinion of the free wheel 89 (equal ratio on the two vehicles 01 and 02) allows positioning this range according to needs by climber or sprinter of the double vehicle. Point 6 Double vehicle constituted by two side-by-side vehicles each one with two wheels in tandem 01,02, as for claim 1, characterized in that the spring 65 for handling the transversal attitudes of the double vehicle and the one 692 for handling the longitudinal attitudes of each one of the two side-by-side vehicles 01,02 can be connected to small anti-vibration shock-absorbers.
Point 7 Double vehicle constituted by two side-by-side vehicles each one with two wheels in tandem 01,02, as for point 1, characterized in that in the braking system 09, in the brake mechanical control chain, from the lever to the pliers of the two front and rear wheels, there is a device 090 for dividing up the force to avoid differences between the left and right wheels.
Point 8 Double vehicle constituted by two side-by-side vehicles each one with two wheels in tandem 01,02, as for point 1, characterized in that the same, given the stability thereof, can be equipped with fairings having aereodynamical and/or rain-shield and/or wind-shield function.

## Claims

1. A vehicle comprising:
- a first frame portion (01) comprising at least two wheels in tandem;
- a second frame portion (02) comprising at least two wheels in tandem;
- means for linking said first frame portion to said second frame portion, so that the vehicle can assume at least an equilibrium original position, wherin;
said linking means are articulated,
the arrangement being so that each frame portion has a degree of freedom of rotation around a longitudinal axis XX and a degree of freedom of rotation around a transversal axis ZZ defined with respect to the vehicle running direction,
said first (01) and second (02) frame portion being restrained therebetween in the rotation around the axis XX and independent in the rotation around the axis ZZ, **characterized in that**: said vehicle comprises first elastic means (65) to bring back said vehicle into said original position with respect to the longitudinal axis XX and second elastic means (692) to bring back said vehicle into said original position with respect to the transversal axis ZZ,
further comprising an intermediate frame (03) and wherein said linking means comprises two upper linking crossbars (04, 05) and one lower linking crossbar (06) between said first and second frame portion (01, 02) and said intermediate frame (03),
wherein:
- the linking points between said intermediate frame (03) and said upper crossbars (04, 05) are articulated, with two degrees of freedom around the longitudinal axis XX and the vertical axis YY;
- the linking point between said intermediate frame (03) and said lower crossbar (06) is articulated with one single degree of freedom around the longitudinal axis XX.
- the linking points between said upper (04, 05) and lower (06) crossbars and said first and second frame portion (01, 02) are articulated, with three degrees of freedom around the longitudinal XX, vertical YY and transversal ZZ axes.

2. The vehicle according to claim 1 wherein said first elastic means (65) is preloaded, so that in order to change the attitude of said vehicle along the longitudinal axis XX the pre-load force of said first elastic means is to be overcome (65).

3. The vehicle according to claim 1 or 2 wherein said second elastic means (692) is preloaded, so that in order to change the attitude of said vehicle along the transversal axis ZZ the pre-load force of said second elastic means has to be overcome (692).

4. The vehicle according to anyone of the claims 1 to 3 wherein said first elastic means (65) and/or said second elastic means (692) comprises a spring with adjustable pre-load.

5. The vehicle according to anyone of the claims 1 to 4 wherein the degree of freedom between said intermediate frame (03) and said lower crossbar (06) around the longitudinal axis XX has an established stroke, adjustable clockwise and counterclockwise, being the starting oscillation condition the one of perpendicularity between said frame (03) and said crossbar (06) in the rotation plane.

6. The vehicle according to anyone of the claims 1 to 5 comprising a steering system (07) wherein said steering system comprises a Jeantaud quadrilateral which has linkages articulated with three degrees of freedom so as to allow all transversal and longitudinal attitudes requested to said vehicle.

7. The vehicle according to anyone of the claims 1 to 6 comprising a pedal-propelled, engine-propelled or mixed-propelled system (08).

8. The vehicle according to claim 7 **characterized in that** in said pedal-propelled system (08) the driving gear rim (82) on the pedals'shaft slides axially to align to the rear pinion (84) chosen by the derailleur (85); the driving gear rim (82) is dragged sideways by the linking chain (83) thereto the stepping over of teeth is prevented by the supports (890).

9. The vehicle according to claim 7 **characterized in that** in said pedal-propelled system (08) the vertical bar (891) on the derailleur (85) allows changing from the stationary position in order to obtain gear ratios favourable to re-starts, by pedalling backwards and actuating the derailleur (85) towards pinions (84) with larger diameter.

10. The vehicle according to claim 7 **characterized in that** in the pedal-propelled version (08) the ratios between the driving gear rim (82) and the pinions (84) implement the gear variation range, whereas the ratio between the gearwheel (87) and the pinion of the free wheel (89) allows the positioning in this range.

11. The vehicle according to anyone of the claims 1 to 10 comprising a braking system (09) **characterized in that** said braking system (09), in the brake mechanical control chain, from the lever to the pliers of the front or rear two wheels, has a device (090) for dividing up the force so as to avoid differences between the wheels of said frame portions (01,02).

12. The vehicle according to anyone of the claims 1 to 11 wherein said elastic means is linked to anti-vibration shock-absorbers.

13. The vehicle according to anyone of the claims 1 to 12 equipped with fairings having aerodynamic and/or rain-shield and/or wind-shield function.

14. The vehicle according to anyone of the claims 1 to 13 wherein said first and second frame portion (01, 02) are two equal and symmetric vehicles, each one with two wheels in tandem.

## Patentansprüche

1. Fahrzeug, welches umfasst:
- Einen ersten Rahmenabschnitt (01), der wenigstens zwei Räder in Tandemanordnung aufweist;
- einen zweiten Rahmenabschnitt (02), der wenigstens zwei Räder in Tandemanordnung umfasst;
Mittel zum Verbinden des ersten Rahmenabschnittes mit dem zweiten Rahmenabschnitt, so dass das Fahrzeug wenigstens eine Gleichgewichtsoriginalposition annehmen kann, wobei:
die Verbindungsmittel gelenkig sind,
die Anordnung so ist, dass jeder Rahmenabschnitt einen Rotationsfreiheitsgrad um eine longitudinale Achse XX und einen Rotationsfreiheitsgrad um eine transversale Achse ZZ aufweist, definiert bezüglich der Fahrzeugbewegungsrichtung,
der erste (01) und der zweite (02) Rahmenabschnitt dazwischen in der Rotation um die Achse XX eingeschränkt sind und in der Rotation um die Achse ZZ unabhängig sind,
**dadurch gekennzeichnet, dass** das Fahrzeug erste elastische Mittel (65) umfasst, um das Fahrzeug in die Originalposition mit Bezug auf die longitudinale Achse XX zu bringen, und zweite elastische Mittel (692), um das Fahrzeug in die Originalposition in Bezug auf die transversale Achse ZZ zu bringen,
wobei weiterhin ein Zwischenrahmen (03) vorgesehen ist und wobei die Verbindungsmittel zwei obere verbindende Querstangen (04, 05) und eine untere verbindende Querstange (06) zwischen dem ersten und dem zweiten Rahmenabschnitt (01, 02) und dem Zwischenrahmen (03) umfasst, wobei:
- die Verbindungspunkte zwischen dem Zwischenrahmen (03) und den oberen Querstangen (04, 05) gelenkig sind, mit zwei Freiheitsgraden um die longitudinale Achse XX und die vertikale Achse YY;
- der Verbindungspunkt zwischen dem Zwischenrahmen (03) und der unteren Querstange (06) gelenkig ist, mit einem einzelnen Freiheitsgrad um die longitudinale Achse XX,
- die Verbindungspunkte zwischen den oberen (04, 05) und der untern (06) Querstange und dem ersten und zweiten Rahmenabschnitt (01, 02) gelenkig sind, mit drei Freiheitsgraden um die longitudinale Achse XX, die vertikale Achse YY und die transversale Achse ZZ.

2. Fahrzeug nach Anspruch 1, wobei die ersten elastischen Mittel (65) vorgespannt sind, so dass zum Zwecke der Änderung der Haltung des Fahrzeugs entlang der longitudinalen Achse XX die Vorspannungskraft der ersten elastischen Mittel überwunden (65) werden muss.

3. Fahrzeug nach Anspruch 1 oder 2, wobei die zweiten elastischen Mittel (692) vorgespannt sind, so dass zum Zwecke der Änderung der Haltung des Fahrzeugs entlang der transversale Achse ZZ die Vorspannungskraft der zweiten elastischen Mittel überwunden (692) werden muss.

4. Fahrzeug nach einem der Ansprüche 1 bis 3, wobei die ersten elastischen Mittel (65) und/oder die zweiten elastischen Mittel (692) eine Feder mit einstellbarer Vorspannung umfassen.

5. Fahrzeug nach einem der Ansprüche 1 bis 4, wobei der Freiheitsgrad zwischen dem Zwischenrahmen (03) und der unteren Querstange (06) um die longitudinale Achse XX einen ausgebildeten Takt aufweist, der im Uhrzeigersinn und entgegen dem Uhrzeigersinn einstellbar ist, wobei es sich um die Startschwingungsbedingung derjenigen senkrecht zwischen dem Rahmen (03) und der Querstange (06) in der Rotationsebene handelt.

6. Fahrzeug nach einem der Ansprüche 1 bis 5, welches ein Steuerungssystem (07) umfasst, wobei das Steuerungssystem ein Jeantaud-Quadrilateral umfasst, das Verbindungen aufweist, die mit drei Freiheitsgraden gelenkig sind, um so alle transversalen und longitudinalen Haltungen zu gestatten, die bezüglich des Fahrzeugs erforderlich sind.

7. Fahrzeug nach einem der Ansprüche 1 bis 6, welches ein pedalangetriebenes, ein motorangetriebenes oder ein gemischt angetriebenes System (08) umfasst.

8. Fahrzeug nach Anspruch 7, **dadurch gekennzeichnet, dass** in dem pedalangetriebenen System (08) der Antriebsgangkranz (82) auf der Pedalwelle axial rutscht, um sich mit dem Rückritzel (84) auszurichten, welches durch den Umwerfer (85) ausgewählt wurde; wobei der Antriebsgangkranz (82) seitlich durch die verbindende Kette (83) gezogen wird, wobei das Voranschreiten über die Zähne durch die Unterstützungen (890) verhindert wird.

9. Fahrzeug nach Anspruch 7, **dadurch gekennzeichnet, dass** in dem pedalangetriebenen System (08) die vertikale Stange (891) auf dem Umwerfer (85) einen Wechsel von der stationären Position erlaubt, um Gangverhältnisse zu erhalten, die bezüglich Neustarts zu favorisieren sind, indem rückwärts pedaliert wird und der Umwerfer (85) in Richtung auf die Ritzel (84) mit größerem Durchmesser bewegt wird.

10. Fahrzeug nach Anspruch 7, **dadurch gekennzeichnet, dass** in der pedalangetriebenen Version (08) die Verhältnisse zwischen dem Antriebsgangriemen (82) und den Ritzeln (84) den Gangvariationsbereich implementieren, während das Verhältnis zwischen dem Gangrad (87) und dem Ritzel des Freilaufs (89) die Positionierung in diesem Bereich erlaubt.

11. Fahrzeug nach einem der Ansprüche 1 bis 10, welches ein Bremssystem (09) umfasst, das **dadurch gekennzeichnet ist, dass** das Bremssystem (09) in der mechanischen Bremssteuerkette von dem Hebel zu den Zangen der vorderen oder hinteren beiden Räder eine Vorrichtung (090) zum Aufteilen der Kraft aufweist, so dass Unterschiede zwischen den Rädern der Rahmenabschnitte (01, 02) vermieden werden.

12. Fahrzeug nach einem der Ansprüche 1 bis 11, wobei die elastischen Mittel mit Antivibrations-Stoßabsorbern verbunden sind.

13. Fahrzeug nach einem der Ansprüche 1 bis 12, das mit Verkleidungen ausgestattet ist, welche eine aerodynamische Funktion und/oder eine Regenschutzfunktion und/oder eine Windschutzfunktion aufweisen.

14. Fahrzeug nach einem der Ansprüche 1 bis 13, wobei der erste und zweite Rahmenabschnitt (01, 02) zwei gleiche und symmetrische Fahrzeuge sind, jedes mit zwei Rädern in Tandemanordnung.

## Revendications

1. Véhicule comprenant :
une première partie de cadre (01) comprenant au moins deux roues en tandem ;
une seconde partie de cadre (02) comprenant au moins deux roues en tandem ;
des moyens pour relier ladite première partie de cadre à ladite seconde partie de cadre, de sorte que le véhicule peut adopter au moins une position d'origine d'équilibre, dans lequel :
lesdits moyens de liaison sont articulés,
l'agencement étant de sorte que chaque partie de cadre a un degré de liberté de rotation autour d'un axe longitudinal XX et un degré de liberté de rotation autour d'un axe transversal ZZ défini par rapport à la direction de circulation du véhicule,
lesdites première (01) et seconde (02) parties de cadre étant limitées entre elles en rotation autour de l'axe XX et indépendantes en rotation autour de l'axe ZZ,
**caractérisé en ce que** :
ledit véhicule comprend des premiers moyens élastiques (65) pour ramener ledit véhicule dans ladite position d'origine par rapport à l'axe longitudinal XX et des seconds moyens élastiques (692) pour ramener ledit véhicule dans ladite position d'origine par rapport à l'axe transversal ZZ,
comprenant en outre un cadre intermédiaire (03) et dans lequel lesdits moyens de liaison comprennent deux traverses de liaison supérieures (04, 05) et une traverse de liaison inférieure (06) entre lesdites première et seconde parties de cadre (01, 02) et ledit cadre intermédiaire (03), dans lequel :
- les points de liaison entre ledit cadre intermédiaire (03) et lesdites traverses supérieures (04, 05) sont articulés, avec deux degrés de liberté autour de l'axe longitudinal XX et de l'axe vertical YY ;
- le point de liaison entre ledit cadre intermédiaire (03) et ladite traverse inférieure (06) est articulé avec un seul degré de liberté autour de l'axe longitudinal XX,
- les points de liaison entre lesdites traverses supérieures (04, 05) et inférieure (06) et lesdites première et seconde parties de cadre (01, 02) sont articulés, avec trois degrés de liberté autour de l'axe longitudinal XX, l'axe vertical YY et l'axe transversal ZZ.

2. Véhicule selon la revendication 1, dans lequel lesdits premiers moyens élastiques (65) sont pré-chargés, de sorte qu'afin de modifier l'attitude dudit véhicule le long de l'axe longitudinal XX, la force de pré-charge desdits premiers moyens élastiques doit être maitrisée (65).

3. Véhicule selon la revendication 1 ou 2, dans lequel lesdits seconds moyens élastiques (692) sont pré-chargés, de sorte qu'afin de modifier l'attitude dudit véhicule le long de l'axe transversal ZZ, la force de pré-charge desdits seconds moyens élastiques doit être maitrisée (692).

4. Véhicule selon l'une quelconque des revendications 1 à 3, dans lequel lesdits premiers moyens élastiques (65) et/ou lesdits seconds moyens élastiques (692) comprennent un ressort avec une pré-charge ajustable.

5. Véhicule selon l'une quelconque des revendications 1 à 4, dans lequel le degré de liberté entre ledit cadre intermédiaire (03) et ladite traverse inférieure (06) autour de l'axe longitudinal XX a une course établie, ajustable dans le sens des aiguilles d'une montre et dans le sens inverse des aiguilles d'une montre, qui est la condition d'oscillation de départ, celle perpendiculaire entre ledit cadre (03) et ladite traverse (06) dans le plan de rotation.

6. Véhicule selon l'une quelconque des revendications 1 à 5, comprenant un système de direction (07), dans lequel ledit système de direction comprend un quadrilatère de Jeantaud qui a des tringleries articulées avec trois degrés de liberté afin de permettre toutes les attitudes transversales et longitudinales requises par ledit véhicule.

7. Véhicule selon l'une quelconque des revendications 1 à 6, comprenant un système propulsé par pédales, propulsé par moteur ou propulsé de manière mixte (08).

8. Véhicule selon la revendication 7, **caractérisé en ce que** dans ledit système propulsé par pédales (08), la couronne dentée d'entraînement (82) sur l'arbre des pédales coulisse axialement pour s'aligner avec le pignon arrière (84) choisi par le dérailleur (85) ; la roue dentée d'entraînement (82) est trainée latéralement par la chaîne de liaison (83), le franchissement des dents est empêché par les supports (890).

9. Véhicule selon la revendication 7, **caractérisé en ce que** dans ledit système propulsé par pédales (08), la barre verticale (891) sur le dérailleur (85) permet de passer dans la position fixe afin d'obtenir des rapports favorables aux redémarrages, en pédalant vers l'arrière et en actionnant le dérailleur (85) vers les pignons (84) avec un plus grand diamètre.

10. Véhicule selon la revendication 7, **caractérisé en ce que** dans la version propulsée par pédales (08), les rapports entre la couronne dentée d'entraînement (82) et les pignons (84) mettent en oeuvre la plage de variation d'engrenage, alors que le rapport entre la roue dentée (87) et le pignon de la roue libre (89) permet le positionnement dans cette plage.

11. Véhicule selon l'une quelconque des revendications 1 à 10, comprenant un système de freinage (09) **caractérisé en ce que** ledit système de freinage (09), dans la chaîne de contrôle mécanique de frein, de la poignée aux pinces des deux roues avant ou arrière, a un dispositif (090) pour diviser la force afin d'éviter des différences entre les roues desdites parties de cadre (01, 02).

12. Véhicule selon l'une quelconque des revendications 1 à 11, dans lequel lesdits moyens élastiques sont reliés à des amortisseurs anti-vibration.

13. Véhicule selon l'une quelconque des revendications 1 à 12, équipé de carénages ayant une fonction aérodynamique et/ou de protection contre la pluie et/ou de protection contre le vent.

14. Véhicule selon l'une quelconque des revendications 1 à 13, dans lequel lesdites première et seconde parties de cadre (01, 02) sont deux véhicules égaux et symétriques, chacun avec deux roues en tandem.
